# EUROPÄISCHE PATENTSCHRIFT

(11) **EP 3 551 496 B1**
(45) Veröffentlichungstag und Bekanntmachung des Hinweises auf die Patenterteilung: **01.03.2023**
(21) Anmeldenummer: 17817680.6
(22) Anmeldetag: 29.11.2017
(51) Int. Cl.: B60L 53/10, B60L 53/14, B60L 53/30, B60L 53/31, B60L 53/36, B60L 53/68, B60L 53/65, B60L 53/37

(54) **FAHRZEUGLADESYSTEM UND FAHRZEUGLADEVERFAHREN**
CHARGING SYSTEM FOR A VEHICLE AND A CORRESPONDING METHOD
SYSTÈME DE CHARGEMENT D'UN VÉHICULE ET PROCÉDÉ POUR CHARGER UN VÉHICULE

(30) Priorität: 16.01.2017 DE 102017200582
(43) Veröffentlichungstag der Anmeldung: 16.10.2019
(73) Patentinhaber: Siemens Aktiengesellschaft, 80333 München (DE)
(72) Erfinder: ROMPE, Andre, 12621 Berlin Kaulsdorf (DE); HAHRT, Steffen, 13437 Berlin (DE)
(86) Internationale Anmeldenummer: PCT/EP2017/080809
(87) Internationale Veröffentlichungsnummer: WO 2018/130336

(56) Entgegenhaltungen:
- EP-A1- 2 920 022
- EP-A1- 3 533 657
- EP-B1- 2 920 022
- DE-A1-102014 223 931
- DE-T5-112010 006 090
- DE-T5-112010 006 090
- US-A1- 2013 193 918
- US-A1- 2014 035 526
- US-A1- 2016 347 186
- US-B1- 9 371 007

## Beschreibung

Die Erfindung betrifft ein Fahrzeugladesystem und ein Fahrzeugladeverfahren für elektrisch betriebene Fahrzeuge, insbesondere für Busse. Darüber hinaus betrifft die Erfindung eine Fahrzeugladestation und eine Stromabnehmervorrichtung zum Aufladen elektrisch betriebener Fahrzeuge mittels eines solchen Fahrzeugladesystems.

In einigen Städten werden heutzutage Busse eingesetzt, welche ausschließlich elektrisch fahren ("E-Busse"). Oftmals werden diese Busse nicht nur in ihren Depots vor und nach der Betriebszeit aufgeladen, sondern auch während eines betriebsmäßigen Halts an einer Busstation.

Eine Möglichkeit des Aufladens an einer Station wird beispielsweise in der Schrift WO 2016/012173 A1 mit dem Titel "Fahrzeugladestation mit einem Gelenkarm" beschrieben. Eine solche Fahrzeugladestation dient zum Laden des Energiespeichers in einem batteriebetriebenen Fahrzeug, insbesondere einem Elektrobus oder Hybridfahrzeug, während das Fahrzeug in einer vordefinierten Parkposition parkt. Diese Fahrzeugladestation umfasst eine Basis, die in der Nähe der vordefinierten Parkposition angeordnet ist, und einen Gelenkarm mit Ladekontakten für den Stromabnehmer eines E-Busses. Die Ladekontakte sind so angeordnet, dass sie durch eine Schwenkbewegung des Gelenkarms zwischen einer Ruhestellung, in welcher die Ladekontakte sich in einem größeren Abstand oberhalb des Fahrzeugdaches befinden, und einer Arbeitsstellung, in welcher zum Zweck des Ladens ein elektrischer Kontakt zwischen den Ladekontakten und einer auf dem Fahrzeugdach stationär angeordneten Ladeschnittstelle hergestellt ist, verstellbar ist.

Darüber hinaus sind partielle Oberleitungssysteme bekannt und Systeme, an denen das Fahrzeug mittels Steckkontakten aufgeladen werden kann.

Die Patentanmeldung EP 2 920 022 A1 zeigt Systeme und Verfahren zum schnellen Laden eines elektrischen Fahrzeugs an einer Ladestation. Das Fahrzeug wird an einer vorgegebenen Lade- und/oder Entladestelle positioniert. Dann wird ein Ladearm mit einer Vielzahl an Ladebürsten relativ zum Fahrzeug positioniert. Die Vielzahl an Ladebürsten auf dem Ladearm wird so positioniert, um eine Ladeschnittstelle des elektrischen Fahrzeugs zu kontaktieren. Die Ladebürsten werden derart relativ zur Ladeschnittstelle bewegt, dass ein Teil der Ladebürsten als Ergebnis der Bewegung entfernt wird.

Aus der Patentanmeldung US 2014/0035526 A1 sind Systeme, Verfahren und Vorrichtungen zum Laden eines Fahrzeugs in einem drahtlosen Energieübertragungssystem bekannt. Dabei werden Abstände zwischen dem Fahrzeug und jeder einer Vielzahl an Ladestationen ermittelt. Ferner wird in Abhängigkeit der Abstände selektiv mit einer bestimmten der Vielzahl an Ladestationen kommuniziert.

Die Patentanmeldung US 2016/0347186 A1 offenbart ein Verfahren zur Kommunikation zwischen einem Fahrzeug und einer streckenseitigen Steuerungseinheit zur Steuerung einer induktiven Energieübertragung in das Fahrzeug. Die Steuerungseinheit steuert die Erzeugung eines elektromagnetischen Feldes durch eine Primäreinheit mit einer Primärwicklungsstruktur eines Systems zur induktiven Energieübertragung. Das Fahrzeug umfasst eine Sekundäreinheit mit einer Sekundärwicklungsstruktur zum Empfangen des elektromagnetischen Wechselfeldes. Das Laden betreffende Daten werden zwischen dem Fahrzeug und der Steuerungseinheit über eine erste Kommunikationsverbindung übertragen. Die Authentifizierung betreffende Daten werden zwischen dem Fahrzeug und der Steuerungseinheit über eine zweite Kommunikationsverbindung übertragen und zur Authentifizierung der das Laden betreffenden Daten verwendet.

Aus der Veröffentlichung DE 11 2010 006 090 T5 ist eine Ladevorrichtung bekannt, welche eine Bereichs-ID, die eine Information ist, die die Ladevorrichtung zum Bestimmen der Anwesenheit eines Fahrzeugs verwendet, einem Ladebereich BS zuweist und die zugewiesene Bereichs-ID überträgt. Basierend auf einer Rückgabe der übertragenen Bereichs-ID vom Fahrzeug führt die Ladevorrichtung eine Paarbildung, die eine Kommunikationsverbindungseinstellung ist, zwischen der Ladevorrichtung und dem Fahrzeug durch. Die Ladevorrichtung führt dann eine Energieverwaltung der von dem Ladebereich BS zum Fahrzeug übertragenen elektrischen Energie auf kontaktlose Weise durch drahtlose Kommunikation zwischen dem miteinander gepaarten Fahrzeug und der Ladevorrichtung durch.

Zur korrekten individuellen Steuerung des Ladeablaufs ist eine ständige Kommunikation zwischen dem Fahrzeug und den Komponenten des Ladesystems (der zentralen Steuerung oder den Ladestationen) erforderlich, wobei eine zuverlässige Zuordnung (Assoziation) hergestellt werden muss, an welcher Ladestation das Fahrzeug aktuell geladen wird. Bei den gegenwärtigen E-Bus-Ladestationen erfolgt diese Kommunikation zwischen den Fahrzeugen und den Komponenten des Ladesystems daher in der Regel mittels eines gerichteten WLAN. Dabei nutzen Lademast und E-Bus Richtantennen, deren Richtwirkung den Empfangsbereich auf wenige Meter reduziert. Dadurch soll eine eindeutige Zuordnung zwischen E-Bus und Ladestation gewährleistet werden, um zu vermeiden, dass die Fahrzeuge nicht der tatsächlichen Ladestationen zugeordnet werden.

Nachteil des Standes der Technik ist, dass es sich in der Praxis gezeigt hat, dass der Ansatz mit einem gerichteten WLAN bei nah beieinander angeordneten Ladestationen zu Störungen des Ladeablaufs führen kann. Insbesondere wenn an der Ladestation eines E-Busses ein zweiter E-Bus dicht vorbeifährt und ggf. dort hält, ergeben sich oftmals Störungen und Fehler.

Es ist daher eine Aufgabe der vorliegenden Erfindung, ein Fahrzeugladesystem und ein Fahrzeugladeverfahren derart weiterzuentwickeln, dass die Nachteile des Standes der Technik behoben werden.

Diese Aufgabe wird durch ein Fahrzeugladesystem gemäß Patentanspruch 1 und ein Fahrzeugladeverfahren gemäß Patentanspruch 8 gelöst.

Das erfindungsgemäße Fahrzeugladesystem umfasst
- eine Mehrzahl von Ladestation zum elektrischen Aufladen von Fahrzeugen,
- ein Steuersystem,
- ein Kommunikationsnetzwerk zur Kommunikation zwischen dem Steuersystem und weiteren Komponenten des Fahrzeugladesystems, wobei diese weiteren Komponenten alle in dieser Beschreibung genannten zum Ladesystem zugehörige Komponenten sein können, insbesondere jedoch die Ladestation bzw. deren Komponenten und die unten genannten Identifikations-Detektionseinheiten aber ggf. auch zur Kommunikation mit Identifikations-Objekten oder Fahrzeugen,
- Funkelemente zur Herstellung einer drahtlosen Kommunikation zwischen den Fahrzeugen und dem Steuersystem, damit für einen Aufladevorgang benötigte Daten mittels dieser Kommunikation ausgetauscht werden können, wobei das Fahrzeugladesystem einen Accesspunkt mit einer WLAN-Schnittstelle aufweist, über die parallel mehrere Fahrzeuge mit dem Fahrzeugladesystem kommunizieren können, und
- an zumindest einem Teil der Ladestationen angeordnete Identifikations-Detektionseinheiten zur Erkennung von aufzuladenden Fahrzeugen mittels den Fahrzeugen zugeordneten Identifikations-Objekten, wobei die Identifikations-Detektionseinheit eine ausschließlich auf die Ladestation und deren Einfahrt- bzw. Haltebereich eingeschränkte Reichweite oder Ausrichtung aufweist,
- ein Assoziationssystem, welches neben den Identifikations-Detektionseinheiten Identifikations-Objekte umfasst, wobei jedes Identifikations-Objekt eine individuelle Kennung bereitstellt, die durch die Identifikations-Detektionseinheiten detektiert werden kann, und zur Anbringung an einem Fahrzeug ausgebildet ist, und wobei das Assoziationssystem die Fahrzeuge jeweils im Fahrzeugladesystem eindeutig der angefahrenen Ladestation zuordnet, an der aktuell aufgeladen werden soll,
- wobei zumindest eine der Ladestationen einen Lademast aufweist, bevorzugt ist jede Ladestation mit einem solchen Lademast ausgestattet, wobei der Lademast mit einem Schwenkarm und/oder einem Gelenkarm ausgestattet ist und die Identifikations-Detektionseinheit am Schwenkarm und/oder Gelenkarm montiert ist und/oder wobei der Lademast mit einem invertierten Pantographen ausgestattet ist und sich die Identifikations-Detektionseinheit über dem invertierten Pantographen befindet.

Das erfindungsgemäße Fahrzeugladeverfahren zum elektrischen Aufladen eines Fahrzeugs nutzt entsprechend ein Fahrzeugladesystem nach einem der Ansprüche 1 bis 7. In dem Fahrzeugladeverfahren erfolgt für einen Aufladevorgang, zumindest initial, eine drahtlose Kommunikation zwischen dem Steuersystem und dem aufzuladenden Fahrzeug über den Accesspunkt mit WLAN-Schnittstelle. Hierzu wird erfindungsgemäß zunächst mittels einer an der Ladestation angeordneten Identifikations-Detektionseinheit ein aufzuladendes Fahrzeug mittels eines dem Fahrzeug zugeordneten und die eindeutige Kennung bereitstellenden Identifikations-Objekts erkannt und dem Steuersystem und/oder dem aufzuladenden Fahrzeug eine eindeutige Zuordnung dieses Fahrzeugs zur angefahrenen Ladestation übermittelt. Eine Identifikations-Detektionseinheit ist dabei an einem Lademast montiert. Vorzugsweise ist an jedem Lademast eine Identifikations-Detektionseinheit montiert.

Der Erfinder hat herausgefunden, dass die Ursache für die beobachteten Störung Interferenzen sind, die im Nahfeld aufgrund von Reflexionen an der Fahrzeugkarosserie auftreten. Diese Interferenzen führen dazu, dass die Richtwirkung der Antennen aufgehoben oder zumindest verschlechtert wird und daher eine unerwünschte Kommunikation in der unmittelbaren Nachbarschaft der Ladestation praktisch nicht ausgeschlossen werden kann. Die Herstellung eines Kommunikationskanals bzw. die Assoziation von Fahrzeug und Ladestation ist daher mit den Vorrichtungen des Standes der Technik nicht optimal.

Insbesondere treten solche Fehler daher auch an Konfigurationen mit mehreren Ladestation auf (solche Konfigurationen mit mehreren Ladestationen können auch als "Ladestationsgruppen" bezeichnet werden), beispielsweise an Haltestellen, welche von mehreren Buslinien angefahren werden. Somit ist die vorliegende Erfindung insbesondere für eine Anordnung von mehreren dicht benachbarten Ladestationen von großem Vorteil. Es erfolgt eine sichere Zuordnung von Fahrzeugen und Ladestationen, wobei keine Richtantennen mehr benötigt werden und somit Reflexionen keine Rolle mehr spielen.

Eine erfindungsgemäße Fahrzeugladestation umfasst dementsprechend einen Lademast und eine Identifikations-Detektionseinheit, welche am Lademast montiert ist, wobei der Lademast mit einem Schwenkarm und/oder einem Gelenkarm ausgestattet ist und die Identifikations-Detektionseinheit am Schwenkarm und/oder Gelenkarm montiert ist und/oder wobei der Lademast mit einem invertierten Pantographen ausgestattet ist und sich die Identifikations-Detektionseinheit über dem invertierten Pantographen befindet, und ist zum Betrieb in einem erfindungsgemäßen Fahrzeugladesystem oder mit einem erfindungsgemäßen Fahrzeugladeverfahren ausgelegt.

Eine erfindungsgemäße Stromabnehmervorrichtung, die beispielsweise an ein Fahrzeug zur Nutzung des Fahrzeugladesystems montiert werden kann, ist dementsprechend zur Integration in das erfindungsgemäße Ladesystem ausgelegt und mit einem geeigneten Identifikations-Objekt ausgestattet. Mit einer solchen Stromabnehmervorrichtung können auch bereits existierende Fahrzeuge wie E-Busse nachgerüstet werden, um mit dem erfindungsgemäßen Verfahren bzw. einem erfindungsgemäßen Fahrzeugladesystem aufgeladen zu werden.

Die Erfindung kann also insbesondere auch Fahrzeuge umfassen, die zu einer Kommunikation mit dem erfindungsgemäßen Fahrzeugladesystem bzw. zur Ladung mittels des erfindungsgemäßen Ladeverfahrens ausgelegt sind und ein geeignetes Identifikations-Objekt, insbesondere eine Stromabnehmervorrichtung mit einem Identifikations-Objekt, aufweisen.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Beschreibungsteilen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Das Fahrzeugladesystem umfasst ein Assoziationssystem, welches neben den Identifikations-Detektionseinheiten Identifikations-Objekte umfasst, wobei jedes Identifikations-Objekt eine individuelle Kennung bereitstellt, die durch die Identifikations-Detektionseinheiten detektiert werden kann, und bevorzugt zur Anbringung an einem Fahrzeug ausgebildet ist. Zur besseren Verständlichkeit werden die Identifikations-Objekte und die Identifikations-Detektionseinheiten daher im Folgenden auch mit diesem Begriff "Assoziationssystem" zusammengefasst. D.h. die Identifikations-Objekte sind bevorzugt selber Teil des erfindungsgemäßen Fahrzeugladesystems und werden jeweils zur Verwendung von Fahrzeugen mit diesem Fahrzeugladesystem diesen Fahrzeugen zu Beginn zugeordnet bzw. an diesen in geeigneter Weise aufgebracht, montiert etc.

Jedes Identifikations-Objekt stellt eine individuelle Kennung bereit, die bevorzugt durch jede Identifikations-Detektionseinheit detektiert werden kann. Die Identifikations-Objekte können grundsätzlich beliebige Merkmale des Fahrzeugs sein, die zur Kennung bzw. eindeutigen Identifizierung des Fahrzeugs geeignet sind. Bevorzugt sind farbliche und/oder geometrische (ggf. optische) Markierungen, vorzugsweise Zeichen, und/oder datengestützte Kodierungen, vorzugsweise NFC-übermittelte Datenkennungen. Handelt es sich beispielsweise um ein Identifikationsmuster wie einen Barcode, kann dieser einfach auf der Fahrzeugkarosserie aufgebracht sein. Die Identifikations-Objekte können darüber hinaus z.B. zusätzlich anderen Zwecken dienen.

Das Assoziationssystem ist also dazu ausgelegt, die Identität eines Fahrzeugs festzustellen und diese an das Steuersystem mitzuteilen. Zur Zuordnung eines Fahrzeugs zu einer Ladestation registriert eine der betreffenden Ladestation zugeordnete Identifikations-Detektionseinheit die durch ein Identifikations-Objekt bereitgestellte individuelle Kennung, wenn sich dieses im Detektionsbereich der Identifikations-Detektionseinheit befindet.

Die Identifikations-Detektionseinheit weist eine ausschließlich auf die Ladestation und deren Einfahrt- bzw. Haltebereich eingeschränkte Reichweite oder Ausrichtung auf. Dies hat den Vorteil, dass dadurch eine sehr gute Zuordnung des Fahrzeugs zu einer Ladestation möglich wird. Der Einfahrtbereich und der Haltebereich einer Ladestation sind dem Fachmann bekannt und betreffen diejenigen Bereiche, an denen das Fahrzeug bestimmungsgemäß direkt an die Ladestation anfährt bzw. dort zum Laden hält. Insbesondere umfassen Einfahrtbereich und Haltebereich einen Bereich an einer Seite der Ladestation, an der bestimmungsgemäß Fahrzeuge zum Laden halten, dessen Radius nicht mehr als 10 m beträgt, insbesondere nicht mehr als 5 m. Insbesondere sollte die Reichweite also bevorzugt die direkte Nähe zu einer Ladestation nicht überschreiten. Der Begriff "direkt" bezieht sich in dem Zusammenhang mit einer Ladestation auf den Umstand, dass in dieser Nähe keine Anfahrt an eine andere Ladestation erfolgen kann.

Sowohl kabelgebundene als auch drahtlose Kommunikationsnetzwerke sind dem Fachmann allgemein bekannt. Die Kommunikation mit den Fahrzeugen erfolgt im Rahmen der Erfindung drahtlos. Dazu ist es bevorzugt, dass sowohl die Fahrzeuge als auch das Fahrzeugladesystem drahtlose Netzwerkkomponenten aufweisen, die miteinander kommunizieren können, wobei im Hinblick auf das Fahrzeugladesystem bevorzugt ist, dass die Ladestationen selbst diese drahtlosen Netzwerkkomponenten aufweisen und/oder das Fahrzeugladesystem zusätzlich Accesspunkte für diesen Zweck aufweist.

Bevorzugt ist, dass neben der Kommunikation mit den Fahrzeugen auch weitere Teile des Kommunikationsnetzwerks auf Funkübertragungen basieren.

Eine Kommunikation zwischen einer Komponente des Fahrzeugladesystems und einem Fahrzeug erfolgt mittels WLAN und ggf. NFC. Diese Komponenten sind insbesondere die Steuereinheit oder ein mit der Steuereinheit durch Datenleitungen verbundener Accesspunkt und/oder die Ladestation. Als "Accesspunkt" werden Einheiten bezeichnet, über die eine Verbindung mit einem Netzwerk hergestellt werden kann. Bevorzugte Accesspunkte sind Router. Für den Fall, dass ein WLAN-Netzwerk als oder im Kommunikationsnetzwerk verwendet wird, ist ein ungerichtetes WLAN ohne Richtfunksender bzw. ohne Richtempfänger bevorzugt. NFC-Schnittstellen sind zur Nahfeldkommunikation ("Near Field Communication" - "NFC") ausgelegt. Vorzugsweise sind diese durch ISO 14443, 18092, 21481 ECMA 340, 352, 356, 362 beziehungsweise ETSI TS 102 190 genormt. Die maximale Reichweite der NFC ist bevorzugt kleiner als 5 m, vorzugsweise kleiner als 2 m.

In einer alternativen Ausführung kann Ultra Wide Band (UWB) Kommunikation eingesetzt werden, bei der eine Kommunikation in einem Radius von ca. 100 m erreicht werden kann.

Bevorzugt weisen die Ladestationen jeweils WLAN- und/oder NFC-Schnittstellen auf. Alternativ oder zusätzlich kann das Fahrzeugladesystem einen Accesspunkt mit einer WLAN- und/oder NFC-Schnittstelle aufweisen. Besonders bevorzugt handelt es sich hierbei um eine gemeinsam WLAN-Schnittstelle, über die parallel mehrere Fahrzeuge mit dem Fahrzeugladesystem kommunizieren können, beispielsweise alle Fahrzeuge, die sich an den Ladestationen einer Ladestationsgruppe befinden. Hierzu bietet sich besonders eine WLAN-Schnittstelle an.

Auch die Identifikations-Detektionseinheit oder das Identifikations-Objekt können bei einer bevorzugten Variante miteinander kommunizieren, wobei hier zum Beispiel ausschließlich eine NFC-Kommunikation genutzt werden kann. Insbesondere könnte also auch, wenn alle Ladestationen mit NFC-Schnittstellen ausgestattet sind, die komplette Kommunikation über diese Schnittstellen erfolgen.

Auch wenn jede Ladestation eine eigene Steuereinheit aufweisen kann, wobei all diese miteinander koordinierten Steuereinheiten das Steuersystem darstellen, ist es bevorzugt, dass das Steuersystem mehrere Ladestationen, vorzugsweise alle, Ladestationen einer Ladestationsgruppe steuert. Bevorzugt routet das Steuersystem eine Kommunikation zwischen einem Fahrzeug und einer Ladestation. Ein solches zentral wirkendes Steuersystem kann auch als "Assoziationsmanager" bezeichnet werden.

Gemäß einer bevorzugten Ausführungsform ist das Steuersystem, zumindest teilweise, dezentral organisiert und es existieren, insbesondere mehrere, Teil-Steuersysteme, die zum Steuern von Ladevorgängen ausgelegt sind. Ein solches Teil-Steuersystem des Steuersystems ist bevorzugt an bzw. in einer Ladestation und/oder einem Fahrzeug angeordnet. Diese Teil-Steuersysteme sind vorteilhafterweise so ausgestaltet, dass sie bevorzugt untereinander oder zumindest mit einem Master-Teil-Steuersystem, welches die Steuervorgänge koordiniert, direkt oder indirekt Daten austauschen können. Dieser Datenaustausch erfolgt dann über die genannten Funkschnittstellen.

Der grundsätzliche Aufbau von Ladestationen (diese könnten auch als "Ladevorrichtung" bezeichnet werden) zum elektrischen Aufladen von Fahrzeugen sind dem Fachmann bekannt. Sie umfassen üblicherweise eine Ladeeinheit, Ladekontakte, die zusammen mit fahrzeugseitigen Stromabnehmern eine elektrisch leitende Verbindung mit dieser Ladeeinheit und einer Stromspeichereinheit herstellen können, und Einheiten zur Steuerung des Ladevorgangs. Wenn die Ladestation mit übergeordneten Steuersystemen kommuniziert, umfasst diese Ladestation zusätzlich noch eine Steuereinheit für diese Kommunikation.

Die fahrzeugseitigen Stromabnehmer können Teil einer Stromabnehmervorrichtung bzw. fahrzeugseitigen Ladeschnittstelle sein, die bevorzugt auch ein Identifikationsobjekt umfasst.

Bevorzugte Ladestationen, die insbesondere zum Laden gemäß V2G-Protokollversionen nach der ISO/IEC 15118-2 geeignet sind, umfassen wie gesagt eine Ladeeinheit, bevorzugt einen High Power Charger ("HPC", eine Hochleistungsladestation), einen Ladeeinheitscontroller, bevorzugt einen High Power Charger Controller ("HPCC"), und eine Ladekommunikationssteuerung, bevorzugt einen Supply Equipment Communication Controller ("SECC", s. ISO/IEC 15118-2). Die Ladestationen gemäß der Erfindung umfassen wie ebenfalls erwähnt zusätzlich noch eine Identifikations-Detektionseinheit.

Die Ladestationen sind bevorzugt zum Laden gemäß V2G-Protokollversionen nach der ISO/IEC 15118-2 ausgelegt ("V2G": Vehicle to Grid). Dies hat den Vorteil einer anerkannten Normierung.

Der Lademast weist vorzugsweise einen Schwenkarm und/oder einen Gelenkarm auf, besonders bevorzugt in der Form eines invertierten Pantographen.

Die Identifikations-Detektionseinheit kann dabei auch an dem Schwenkarm und/oder Gelenkarm montiert sein. Dies hat insbesondere bei einer Anordnung des Identifikationsobjekts an oder nahe an den Stromabnehmern den Vorteil, dass die Identifikations-Detektionseinheit sich zumeist automatisch dort befindet, wo sie das Identifikationsobjekt gut registrieren kann. Bei einem Lademast mit einem invertierten Pantographen befindet sich diese aber bevorzugt über dem invertierten Pantographen und wird insbesondere nicht mit dem Pantographen bewegt.

Eine Anordnung an einem feststehenden Teil des Lademastes hat bei einer Anordnung des Identifikationsobjekts über dem Stromabnehmer den Vorteil, dass die Identifikations-Detektionseinheit sich stets an einer klar definierten Position, beispielsweise im Zentrum des elektrischen Kontaktinterfaces, befindet, wo sie das Identifikationsobjekt gut registrieren kann und eine stabile geometrische Referenz zum Kontaktinterface auf dem Bus darstellt.

Bevorzugt weist das Fahrzeugladesystem also auch ein Positionsbestimmungssystem auf, um an einer Ladestation für das Fahrzeug die Position einer Kontaktschnittstelle des Fahrzeugs im Verhältnis zu einer Ladeschnittstelle der Ladestation zu bestimmen. Das Positionsbestimmungssystem bestimmt dabei optisch die Position in mindestens zwei Dimensionen. Ein Beispiel für ein solches Positionsbestimmungssystem wird in der DE 10 2016 205 804 beschrieben, deren Inhalt hier insoweit vollumfänglich inkorporiert wird.

Das erfindungsgemäße Fahrzeugladesystem ist zum Laden von Fahrzeugen ausgerichtet. Es kann diese Fahrzeuge umfassen, aber dies ist nicht zwingend erforderlich, da grundsätzlich lediglich die Anwesenheit der Identifikations-Objekte an den Fahrzeugen notwendig ist und so Fahrzeuge einfach umgerüstet werden können. Es sollte jedoch eine Gruppe von Fahrzeugen geben, die bestimmungsgemäß mit einem solchen System geladen werden können. Diese Fahrzeuge sind bevorzugt Fahrzeuge des öffentlichen Nahverkehrs, z.B. E-Busse. Jedes Fahrzeug, welches für das erfindungsgemäße System oder Verfahren ausgelegt ist, muss zumindest ein Identifikations-Objekt aufweisen und bevorzugt ein Funkelement zur Herstellung eines Kommunikationskanals, z.B. eine WLAN-Schnittstelle.

Die Identifikations-Objekte können unterschiedlich ausgestaltet sein. Gemäß einer bevorzugten Ausführungsform umfasst ein Identifikations-Objekt zumindest eine der folgenden Komponenten:
- Ein geometrisches Objekt, wie ein Rechteck, ein Kreuz, oder eine andere geometrische Figur, deren Größe und relative Lage durch bildgebende Identifikation ermittelt werden kann,
- ein Code-Symbol, z. B. ein 2D-Barcode, in dem charakteristische Informationen, wie E-Bus-ID, relative Position des Code-Symbols zum Zentrum des E-Bus-Kontaktinterfaces codiert sind,
- eine modulierte Lichtquelle, wie eine einzelne LED oder eine geometrische Anordnung von mehreren LED, oder
- das Einprägen von Informationen durch Modulation in den Lichtstrom, wie
   o E-Bus-ID
   o relativen Lage des Zentrums des Identifikations-Objekts zu den E-Bus-Ladekontakten

Je nach Art der Identifikations-Objekte können die Identifikations-Detektionseinheiten unterschiedlich ausgestaltet sein.

Gemäß einer bevorzugten Ausführungsform umfasst eine Identifikations-Detektionseinheit zumindest eine der folgenden Komponenten:
- eine Kamera, vorzugsweise zur Aufnahme von Identifikations-Objekten, welche Zeichenkombinationen, Barcodes, geometrische Objekte und/oder optische Farbcodierungen umfassen, wobei aus dem Bild der Kamera zusätzlich auch Positionsinformationen der Identifikations-Objekte bestimmt werden können,
- einen IR-Empfänger zum Empfang von Signalen von IR-Sendern der Identifikations-Objekte, wobei die Sender der Identifikations-Objekte die Informationen mittels entsprechend modulierter Signale senden.

Als Beispiele zum Verständnis der Erfindung seien folgende Komponenten für die Identifikations-Detektionseinheit genannt:
- einen NFC-Empfänger zum Empfang von Signalen von NFC-Sendern der Identifikations-Objekte, besonders bevorzugt RFID-Einheiten, wobei bevorzugt sowohl die Identifikations-Detektionseinheit als auch die Identifikations-Objekte zum Senden und Empfangen von Daten mittels NFC ausgelegt sind.
- einem UWB (Ultra Wide Band) Empfänger zum Empfang von Signalen von UWB-Sendern der Identifikations-Objekte

Bevorzugte Paarungen von Identifikations-Detektionseinheiten und Identifikations-Objekten ergeben sich daraus also wie folgt:
In dem bevorzugten Fall, dass die Identifikations-Detektionseinheiten Kameras sind, sind die bevorzugten Identifikations-Objekte Objekte der Gruppe geometrische Objekte, Zeichenkombinationen (Ziffern und/oder Buchstaben), Barcodes, eine einzelne LED oder eine geometrische Anordnung von mehreren LED, die modulierte Informationen senden und Farbcodierungen.

In dem bevorzugten Fall, dass die Identifikations-Detektionseinheiten IR-Empfänger sind, sind die bevorzugten Identifikations-Objekte IR-Dioden, die die Informationen mittels entsprechend modulierter Signale senden.

In dem bevorzugten Fall, dass die Identifikations-Detektionseinheiten ein Kombination aus Kamera und IR-Empfänger sind, sind die bevorzugten Identifikations-Objekte IR-Dioden, die die Informationen mittels entsprechend modulierter Signale senden.

Im Beispielfall, dass die Identifikations-Detektionseinheiten UWB-Sende- und Empfangseinheiten sind, sind die bevorzugten Identifikations-Objekte UWB-Sende- und Empfangseinheiten, die die Informationen mittels entsprechend modulierter Signale senden und empfangen.

Im Beispielfall, dass die Identifikations-Detektionseinheiten NFC-Einheiten sind, sind die bevorzugten Identifikations-Objekte RFID-Einheiten und/oder drahtlose Netzwerckomponenten. Neben einer aktiv-passiv Konfiguration, bei der die Identifikations-Detektionseinheit den aktiven Part darstellt, ist eine aktiv-aktive Konfiguration bevorzugt, bei der ein Datenaustausch zwischen Identifikations-Detektionseinheiten und Identifikations-Objekten stattfinden kann.

Im Beispielfall ist die NFC-oder UWB-Verbindung zwischen Identifikations-Detektionseinheiten und Identifikations-Objekten so gestaltet, dass zusätzlich alle relevanten Informationen einer V2G-Verbindung zwischen dem Fahrzeug und der Ladestation über die NFC-oder UWB-Verbindung ausgetauscht werden können.

Gemäß einer bevorzugten Ausführungsform mit einem erfindungsgemäßen Fahrzeugladesystem umfasst das Fahrzeugladeverfahren einen oder mehrere der folgenden Schritte:
a. Einfahren eines Fahrzeugs in einen Empfangsbereich von Funkelementen zur drahtlosen Kommunikation zwischen dem Steuersystem und dem aufzuladenden Fahrzeug.
b. Herstellung eines drahtlosen Kommunikationskanals zwischen dem eingefahrenen Fahrzeug und dem Steuersystem.
c. Wenn noch nicht erfolgt: Anfahrt des Fahrzeugs an die Ladestation und Erfassen einer individuellen Kennung, welche dem Identifikations-Objekt des Fahrzeugs zugeordnet ist, durch die Identifikations-Detektionseinheit und eindeutige Zuordnung des Fahrzeugs zur angefahrenen Ladestation, an der aktuell geladen werden soll.
d. Übermittlung der relevanten Informationen zwischen dem Fahrzeug und dem Fahrzeugladesystem für eine V2G-Verbindung zwischen dem Fahrzeug und der Ladestation, bevorzugt initiiert vom Steuersystem, und Herstellung einer V2G-Verbindung zwischen dem Fahrzeug und der Ladestation.
e. Übermittlung eines Freigabesignals zum Start des Ladevorgangs durch das Fahrzeug.
f. Abwicklung des Ladevorgangs für das betreffende Fahrzeug über die derart etablierte Verbindung.

Ein erster Kommunikationskontakt zwischen Fahrzeug und Fahrzeugladesystem erfolgt über einen Accesspunkt des Fahrzeugladesystems. Vorzugsweise wird dabei über diesen Accesspunkt ein Kommunikationskanal eingerichtet, über den die weitere Kommunikation erfolgt. Insbesondere wird dadurch eine V2G-Verbindung zur Kommunikation hergestellt. Die zum Laden notwendige Kommunikation (im Folgenden auch als "Ladekommunikation" bezeichnet) zwischen dem Fahrzeug und dem Fahrzeugladesystem erfolgt somit bevorzugt über den Accesspunkt. Dies hat den Vorteil, dass das Netzwerk einfach mittels handelsüblicher Komponenten aufgebaut werden kann.

Gemäß einer bevorzugten Ausführungsform wird zum Start des Ladevorgangs ein Freigabesignal vom Fahrzeug an das Steuersystem und/oder die Ladestation übermittelt. Dieses Freigabesignal wird vorzugsweise bei Anziehen einer Handbremse des Fahrzeugs selbsttätig generiert bzw. übermittelt. Dies hat den Vorteil, dass der Start des Ladevorgangs vom Fahrer des Fahrzeugs initiiert werden kann und eine unkontrollierte Bewegung des Fahrzeugs während des Ladens ausgeschlossen wird.

Vorteilhafterweise können Signale von einer Identifikations-Detektionseinheit an ein Identifikations-Objekt eines aufzuladenden Fahrzeugs gesendet werden. Dies hat den Vorteil, dass eine Kommunikation zwischen Fahrzeug und Fahrzeugladesystem nicht zwingend über WLAN erfolgen muss.

Im Folgenden wird noch einmal ein besonders bevorzugter möglicher Ablauf des Fahrzeugladeverfahrens etwas detaillierter angegeben. Diese Fahrzeugladeverfahren weist eines oder mehrere, besonders bevorzugt alle, der folgenden Merkmale auf, wobei als Beispiel ein E-Bus (als Synonym für Fahrzeuge) geladen wird:
Beim Einfahren eines E-Busses in den Empfangsbereich einer Funkschnittstelle eines Ladesystems, z. B. einer Ladestationsgruppe, nimmt das Fahrzeug über die Funkschnittstelle mit dem Ladesystem Kontakt auf. Bevorzugt umfasst das Fahrzeugladesystem einen oben beschriebenen Accesspunkt mit einer Funkschnittstelle, über den zumindest dieser erste Kontakt zwischen Fahrzeug und Fahrzeugladesystem erfolgt und durch den bevorzugt der Kommunikationskanal eingerichtet wird oder über den die gesamte Kommunikation abgewickelt wird. Dabei wird bevorzugt zunächst eine Verbindung zwischen E-Bus und Accesspunkt und danach eine Verbindung zwischen Accesspunkt und Steuersystem hergestellt und so eine Kommunikation zwischen E-Bus und Steuersystem erreicht.

Die Funkschnittstelle ist hierbei als WLAN-Schnittstelle ausgelegt, dass sie den gesamten Bereich der Ladestation oder der Ladestationen abdeckt.

Bei der Herstellung eines drahtlosen, vorzugsweise gesicherten, d.h. insbesondere verschlüsselten, Kommunikationskanals zwischen dem eingefahrenen Fahrzeug und dem Steuersystem nach diesem Erstkontakt werden bevorzugt bekannte Protokolle verwendet.

Es wird dabei im Rahmen der Kommunikation seitens des E-Busses bevorzugt die E-Bus-ID, also die eindeutige Kennzeichnung des E-Busses, und vorzugsweise die individuelle IP-Adresse des sogenannten "EVCC" des Busses (Lade-Steuerungsmodul: "Electric Vehicle Communication Controller", s. ISO/IEC 15118-2) übermittelt.

Es ist dabei bevorzugt, dass die Identifikations-Detektionseinheit so gestaltet ist, dass sie zyklisch, insbesondere mit einer Wiederholrate von mindestens 10 Hz zumindest folgende Informationen bereitstellt:
- E-Bus-ID (Kennung),
- gegebenenfalls IP-Adresse des EVCC,
- Momentane relative Position des Identifikations-Objekts zur Identifikations-Detektionseinheit in mindestens zwei Dimensionen, vorzugsweise als Abweichung des geometrischen Zentrums der Position des Identifikations-Objekts zum geometrischen Zentrum der Identifikations-Detektionseinheit,
- 2D-Koordinaten der Position des Identifikations-Objekts bezüglich des Zentrums des Kontaktinterfaces des E-Busses.

Das Steuersystem speichert die vom Fahrzeug übertragenen Informationen bevorzugt in einer Assoziationsliste. In dieser werden für jeden E-Bus separat insbesondere folgende Informationen in jedem Listeneintrag abgelegt:
a. Informationen über den WLAN-Kanal über den die Kommunikation stattfindet.
b. Eine E-Bus-ID (Kennung).
c. Eine E-Bus-EVCC-IP-Adresse, d.h. die Netzwerkadresse des EVCC des E-Busses.
d. Eine Ladestation-SECC-IP-Adresse (diese wird erst nach dem erfolgten Assoziationsvorgang belegt).
e. Assoziationsstatus

Wenn das Fahrzeug dann bei der Anfahrt an die konkrete Ladestation in deren direkte Nähe, d.h. in den Detektionsbereich der Identifikations-Detektionseinheit dieser Ladestation kommt, wird mittels des Identifikations-Objekts u.a. dessen E-Bus-ID (Kennung) identifiziert und übermittelt. Diese wird bevorzugt an das Steuersystem weitergegeben. Der Begriff "direkt" bezieht sich in dem Zusammenhang der Anfahrt an eine Ladestation wie oben erwähnt auf den Umstand, dass in dieser Nähe keine Anfahrt an eine andere Ladestation erfolgen kann. "Direkt" bedeutet in diesem Zusammenhang insbesondere, dass z.B. kein Überlapp mit einem Detektionsbereich einer anderen Ladestation (z.B. ein NFC-Empfangsbereich) und kein Überlapp mit dem Anfahrts- und Haltebereich einer anderen Ladestation vorliegt.

Bevorzugt werden die Daten, welche die Identifikations-Detektionseinheit vom Identifikations-Objekt selber oder dessen Position detektiert, zyklisch an das Steuersystem gesendet, insbesondere zusammen mit der IP-Adresse des SECC.

Sobald das Fahrzeug den Ladevorgang abgeschlossen hat und die Identifikations-Detektionseinheit die Kennung des E-Busses nicht mehr lesen kann, erfolgt die Löschung des Listeneintrags der Assoziationsliste.

Eine Assoziation des E-Busses mit einer Ladestation wird bei der Anfahrt des E-Busses konkret an eine der Ladestationen bevorzugt mittels der folgenden Schritte durchgeführt:
a. Empfang der von dem Identifikations-Objekt bereitgestellten Kennung, und damit Identifikation des einfahrenden E-Busses, mittels der Identifikations-Detektionseinheit dieser Ladestation,
b. Senden dieser Kennung, zusammen mit der IP-Adresse der Ladekommunikationssteuerung (SECC) der betreffenden Ladestation ebenfalls an den Assoziationsmanager.

Bevorzugt ordnet das Steuersystem (bzw. der Assoziationsmanager) die vom Identifikations-Detektionselement gelieferte Kennung der vom Fahrzeug über den WLAN-Kanal empfangenen Daten zu. Das Steuersystem (bzw. der Assoziationsmanager) stellt daraufhin bevorzugt die Assoziation der Ladestation mit dem Fahrzeug mit derselben Kennung her und sendet dann an dieses Fahrzeug die IP-Adresse des SECC. Das Fahrzeug empfängt die IP-Adresse der physisch korrespondierenden Ladestation und baut eine Highlevel-Protokollverbindung (V2G) zur betreffenden Station auf.

Zur Abwicklung der für eine V2G-Verbindung zwischen dem Fahrzeug und der Ladestation relevanten Informationen werden Daten zwischen dem Fahrzeug und dem Fahrzeugladesystem ausgetauscht. Bevorzugt findet dieser Austausch zwischen dem Steuersystem und dem Fahrzeug statt. Sollte der Fall auftreten, dass relevante Daten der Ladestation übermittelt werden müssen, können diese aber auch direkt von der Ladestation übermittelt werden. Die Herstellung einer solchen V2G-Verbindung zwischen dem Fahrzeug und der Ladestation ist gemäß der Norm ISO/IEC 15118-2 bekannt.

Diverse Daten werden innerhalb der V2G-Verbindung bevorzugt zumindest im Rahmen eines oder mehrerer, vorzugsweise aller, der folgenden Schritte übermittelt:
- Zuordnung der von der Identifikations-Detektionseinheit gelieferten Kennung zu der vom E-Bus über den WLAN-Kanal gesendeten E-Bus-Netzwerk-ID durch das Steuersystem.
- Mitteilung der IP-Adresse der Ladekommunikationssteuerung SECC der betreffenden Ladestation an den E-Bus mit der entsprechenden Kennung durch den Assoziationsmanager.
- Empfang der IP-Adresse der physisch korrespondierenden Ladestation durch den E-Bus und Aufbau einer Highlevel-Protokollverbindung (V2G) zur betreffenden Ladestation.

Zum Laden des Fahrzeugs sollte dann die Freigabe für den Start des Ladevorgangs durch das Fahrzeug erfolgen. Dies wird wie erwähnt bevorzugt dadurch erreicht, dass die Handbremse des Fahrzeugs angezogen wird und dieses dem Steuersystem mitgeteilt wird. Anschließend wird der Ladevorgang für das betreffende Fahrzeug über die derart etablierte Verbindung, bevorzugt eine Peer-to-Peer Verbindung (p2p-Verbindung), abgewickelt.

Sobald der E-Bus den Ladevorgang abgeschlossen und die Ladestation verlassen hat und die Identifikations-Detektionseinheit die Kennung des Identifikations-Objekts dadurch nicht mehr lesen kann, erfolgt bevorzugt die Löschung des entsprechenden Listeneintrags der Assoziationsliste. Dadurch wird die Zuordnung von Fahrzeug und Ladestation aufgehoben.

Ein besonderer Vorteil der Erfindung ist, dass Ladestationen auf engstem Raum angeordnet werden können, ohne dass es zu Komplikationen bei der Zuordnung zwischen E-Bus und Ladestation kommt. Auf Richtantennen kann wie oben erwähnt vollständig verzichtet werden. Des Weiteren kann beliebig zusätzliche Information zwischen Bus und Ladestation ausgetauscht werden. Beispielsweise kann in der Annäherungsphase des Fahrzeugs an den Lademast die relative Positionsabweichung zwischen dem Identifikations-Objekt, die die aktuelle E-Bus-Position bezüglich des Ladekontaktinterfaces repräsentiert, und der Position der Identifikations-Detektionseinheit, die die zentrale Position des Zielgebietes der Ladeposition repräsentiert, zum Fahrzeug fortlaufend kommuniziert werden. Diese Positionsinformationen können dem Fahrer auf geeignete Weise angezeigt werden, um den Positionierprozess des Fahrzeugs zu vereinfachen und zuverlässiger zu gestalten. Zudem ist das erfindungsgemäße Prinzip kompatibel mit den gegenwärtigen und zukünftigen V2G-Protokollversionen gemäß der ISO/IEC15118-2.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
- FIG 1: eine schematische Darstellung einer Aufladesituation an einer erfindungsgemäßen Ladestation,
- FIG 2: eine schematische Darstellung eines Ausführungsbeispiels einer erfindungsgemäßen Ladestation,
- FIG 3: ein Blockschaltbild einer bevorzugten Ausführungsform eines erfindungsgemäßen Fahrzeugladesystems,
- FIG 4: ein Blockschaltbild einer weiteren bevorzugten Ausführungsform eines erfindungsgemäßen Fahrzeugladesystems,
- FIG 5: eine Ablaufskizze eines möglichen Vorgehens bei der Zuordnung eines Fahrzeugs zu einer Ladestation,
- FIG 6: eine weitere Ablaufskizze eines möglichen Vorgehens bei der Zuordnung eines Fahrzeugs zu einer Ladestation.

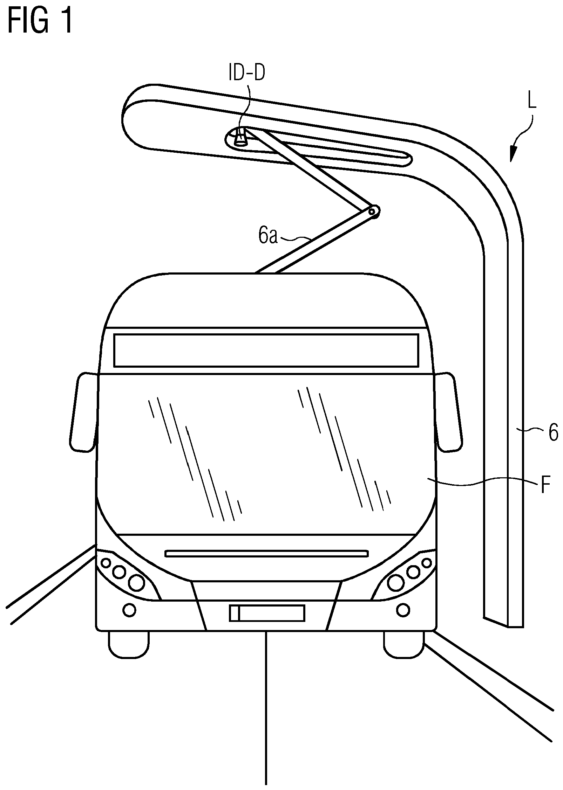

In der FIG 1 ist eine erfindungsgemäße Ladestation L mit einem zumindest teilweise elektrisch angetriebenen Fahrzeug F dargestellt, welches gerade an der Ladestation L aufgeladen wird. Die Ladestation 6 umfasst einen Lademast 6 am Rand an einer Straße mit einem sich quer zur Fahrbahnrichtung erstreckenden Ausleger, an dem ein Gelenkarm 6a angeordnet ist, der in diesem Beispiel als Pantograph 6a ausgebildet ist.

Eine Kontaktschnittstelle auf dem Dach des Fahrzeugs F, die in FIG 1 jedoch nicht sichtbar ist, ist im Verhältnis zu dem Pantographen 6a in einem Bereich positioniert, in dem die Kontaktschnittstelle mittels einer Ladeschnittstelle des Pantographen 6a kontaktiert werden kann. Die Ladestation L umfasst am Ausleger neben dem invertierten Pantographen 6a, an dessen unbewegten Montagefußpunkt, eine Identifikations-Detektionseinheit ID-D, hier in Form einer Kamera.

Dieser Montageort ist vorteilhaft, da die Identifikations-Detektionseinheit ID-D dann einen bekannten ortsfesten Bezug zum Kontaktbereich des Pantographen-Kontaktsystems hat.

Das funktionale Zusammenspiel der einzelnen Komponenten wird im Zusammenhang mit einem vom mechanischen Aufbau des Lademastes etwas anderen Ausführungsbeispiel in der folgenden Darstellung genauer erläutert.

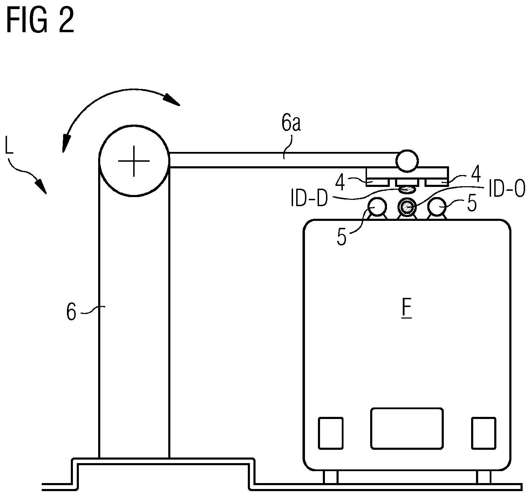

Die in FIG 2 grob schematisch dargestellte Ladestation L zur Aufladung eines Fahrzeugs F mit elektrischer Energie weist einen Lademast 6 mit einem daran beweglich gelagerten Gelenkarm 6a auf. Das Fahrzeug F ist hier zum Beispiel ein E-Bus, da dies der bevorzugte Einsatz der erfindungsgemäßen Ladestation L ist.

An seinem freien Ende ist der Gelenkarm 6a hier ebenfalls über ein Drehgelenk mit einer Ladeschnittstelle, hier mit zwei Ladekontakten 4, ausgestattet, die mit einer Ladeeinheit (in FIG 2 nicht dargestellt) der Ladestation L verbunden sind. Eine Ladung des Fahrzeugs F mit elektrischer Energie (Strom) wird dadurch erreicht, dass die Ladekontakte 4 mit Stromabnehmern 5 an einer Ladeschnittstelle auf dem Dach des Fahrzeugs F in Kontakt gebracht werden, so dass ein Strom von der Ladeeinheit der Ladestation L zum elektrischen System des Fahrzeugs F, insbesondere dessen Energiespeicher, fließen kann.

Hierzu muss das Fahrzeug F, wie in FIG 2 dargestellt, in eine vordefinierten Parkposition an einer freie Ladestation L, beispielsweise direkt unter bzw. neben den Lademast 6 fahren, worauf dann zum Beispiel der Gelenkarm 6a heruntergeschwenkt wird, damit die Ladekontakte 4 die Stromabnehmer 5 kontaktieren.

Alternativ oder zusätzlich ist es auch möglich, dass die Stromabnehmer 5 am Fahrzeug F beweglich angeordnet sind und von unten gegen die Ladekontakte 4 gedrückt werden. In diesem Fall könnte anstelle des Schwenkarms auch ein einfacher unbeweglicher Arm am Mast 6 vorhanden sein, an dem die Ladekontakte 4 angeordnet sind. Ebenso könnten anstelle eines einzelnen Mastes auch mehrere Masten und ein Leitungssystem zwischen diesen Masten genutzt werden oder dergl.

Eine solche Ladestation kann zum Beispiel vom Grundprinzip her wie in der eingangs erwähnten WO 2016/012173 A1 aufgebaut sein. Es sind aber auch andere Aufbauten der Ladestation möglich.

Um einen Ladevorgang an einer Ladestation L in geeigneter Weise steuern zu können, ist wie eingangs erwähnt eine Kommunikation zwischen der Ladestation L, insbesondere deren Steuersystem, und dem zu ladenden Fahrzeug F bzw. dessen für die Aufladung der Batterien vorgesehenen Steuerung erforderlich.

In dem in FIG 2 dargestellten Ausführungsbeispiel soll eine Zuordnung jedes Fahrzeugs F mit der dazugehörigen Ladestation L ermöglicht werden, indem dieses Fahrzeug F mit einem Identifikations-Objekt ID-O versehen ist, welches mithilfe einer Identifikations-Detektionseinheit ID-D, die der Ladestation L zugeordnet bzw. hier konkret an dieser angeordnet ist, eindeutig erkannt werden kann. Über das Identifikations-Objekt ID-O ist letztlich das Fahrzeug F für die Ladestation L bzw. das Ladesystem 1 erkennbar, da das Identifikations-Objekt ID-O eine eindeutige Kennung des Fahrzeugs F aufweist, die dem Ladesystem bzw. der Ladestation L und/oder deren Steuersystem bekannt ist.

Die Identifikations-Detektionseinheit ID-D gestattet es also der Ladestation L, Informationen, die in einem Identifikations-Objekt ID-O eines Fahrzeugs F enthalten sind, auszulesen. Ein Auslesen des Identifikations-Objekts ID-O durch die Identifikations-Detektionseinheit ID-D an einer Ladestation L sollte jedoch bevorzugt erst erfolgen, wenn sich das Fahrzeug F unmittelbar an dieser Ladestation L befindet, d.h. dass es geladen werden könnte.

In dem in FIG 2 dargestellten Beispiel befindet sich die Identifikations-Detektionseinheit ID-D zwischen den Ladekontakten 4 am Arm 6a des Mastes 6 und dementsprechend ist das Identifikations-Objekt ID-O hier zwischen den Stromabnehmern 5 auf dem Dach des Fahrzeugs F so angeordnet, so dass die Identifikations-Detektionseinheit ID-D und das Identifikations-Objekt ID-O in einem kurzen Abstand voneinander liegen, wenn sich das Fahrzeug F in der passenden Parkposition befindet, damit die Ladekontakte 4 mit den Stromabnehmern 5 kontaktieren oder kontaktieren können.

Das Identifikations-Objekt ID-O kann dabei z.B. ein Barcode, ein 2D-Matrix-Barcode bzw. CR-Code oder ein anderes Identifikationsmuster sein, in dem eine Fahrzeug-ID bzw. Kennung codiert ist. Dieses Identifikationsmuster kann dann von einer Kamera der Identifikations-Detektionseinheit ID-D erfasst und mittels einer geeigneten Mustererkennung erkannt werden.

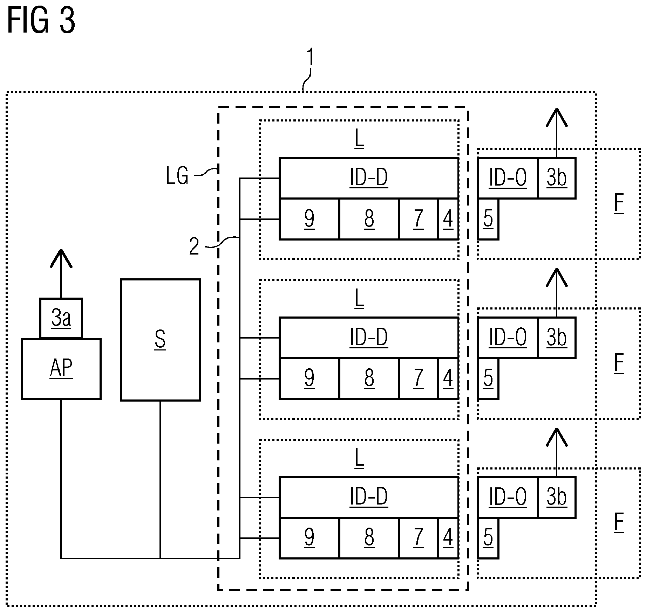

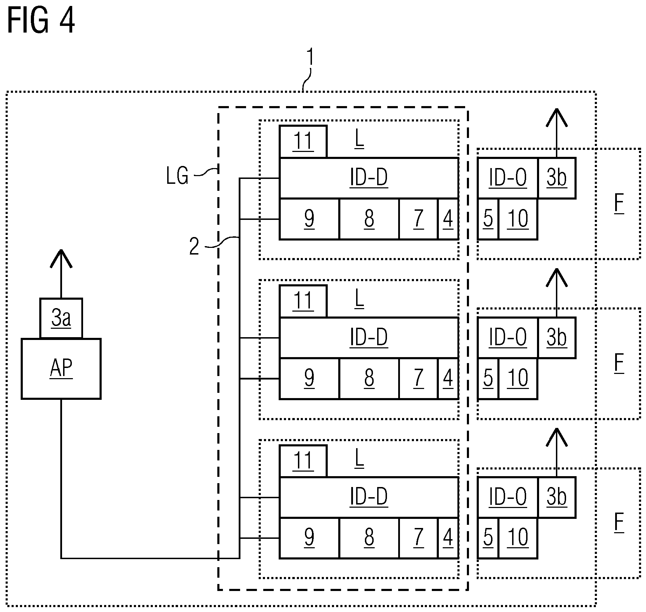

Die wichtigsten Funktionskomponenten werden im Folgenden noch einmal anhand eines Blockschaltbilds eines bevorzugten Ladesystems 1 in den Figuren 3 und 4 erläutert.

Dort ist beispielhaft eine Konfiguration mit einer Ladestationsgruppe LG von drei dicht benachbarten Ladestationen L dargestellt, an denen jeweils ein Fahrzeug F, d.h. insgesamt drei Fahrzeuge F, parallel oder nahezu parallel geladen werden. Ein solches Szenario kommt an einer größeren Haltestelle, an der mehrere Buslinien eines öffentlichen Nahverkehrssystems bedient werden, regelmäßig vor. Grundsätzlich ist eine eindeutige Zuordnung der Fahrzeuge F zu den jeweiligen Ladestationen L wichtig, um ein ungestörtes Aufladen jedes Fahrzeugs F zu gewährleisten.

Jede der Ladestationen L des Ladesystems 1 umfasst in diesem Beispiel eine eigene Ladeeinheit 7 (konkret hier einen sogenannten "High Power Charger" - HPC) mit zugehörigen Ladekontakten 4, sowie einen Ladeeinheitscontroller 8 (auch als "High Power Charger Controller" - HPCC bezeichnet) und eine Ladekommunikationssteuerung 9 (beispielsweise einen sogenannten "Supply Equipment Communication Controller" - SECC) zur Ladesteuerung.

Die Ladung zu den Fahrzeugen F erfolgt dann jeweils wie oben im Zusammenhang mit den Figuren 1 und 2 beschrieben über den Ladekontakt 4 und die Stromabnehmer 5 der Fahrzeuge.

Wie ebenfalls oben im Zusammenhang mit FIG 2 beschrieben, weisen die Ladestationen L jeweils Identifikations-Detektionseinheiten ID-D auf, um Identifikations-Objekte ID-O an den Fahrzeugen auszulesen bzw. deren Position erkennen zu können. Die Identifikations-Detektionseinheiten ID-D an den Ladestationen L bilden somit gemeinsam mit den Identifikations-Objekten ID-O an den Fahrzeugen F ein Assoziationssystem, um die Fahrzeuge F jeweils im Fahrzeugladesystem 1, insbesondere dessen Steuersystem S, temporär für die Zeit des aktuellen Ladevorgangs eindeutig der angefahrenen Ladestation L, an der aktuell geladen werden soll, zu assoziieren, d.h. dieser zuzuordnen.

Die Figuren 3 und 4 unterscheiden sich hinsichtlich der Konfiguration des Steuersystems S und der damit zusammenhängenden Einheiten. FIG 3 weist dabei ein zentrales Steuersystem S (Assoziationsmanager) auf, FIG 4 beschreibt ein dezentrales Steuersystem, dessen Einheiten bzw. Teil-Steuersysteme 10, 11 in den einzelnen Fahrzeugen untergebracht sind.

In der Ausführungsform gemäß der FIG 3 besitzen die Fahrzeuge F zusätzlich jeweils eine WLAN-Schnittstelle 3b, welche mit einem mit einer hierzu kompatiblen WLAN-Schnittstelle 3a, ausgestatteten Accesspunkt AP Kontakt aufnehmen können. Über diese Funkschnittstellen 3a, 3b erfolgt jeweils, wie später noch erläutert wird, die Kommunikation zwischen den Fahrzeugen F und den Ladestationen L bzw. einem Steuersystem S der Ladestationen L zur Einleitung des Ladevorgangs, während des Ladevorgangs und zur Beendigung des Ladevorgangs.

Die per WLAN übermittelten Daten werden hierzu mittels eines weiteren Netzwerks 2, vorzugsweise eines Ethernets 2, an das Steuersystem S und auch an die Ladestationen L gesendet. Das Steuersystem S gewährleistet die zuverlässige Kommunikation und Zuordnung der Fahrzeuge F und Ladestationen L, wobei eine eindeutige Kommunikation zwischen den Ladestationen L und den jeweils von ihnen aktuell geladenen Fahrzeugen F aufgrund der vorherigen eindeutigen Assoziierung gesorgt ist.

Die Identifikations-Detektionseinheiten ID-D können hier ebenfalls Daten, beispielsweise die Informationen über die erkannten Identifikations-Objekte ID-O bzw. Fahrzeuge F, über das Netzwerk 2 an das Steuersystem S senden, und bevorzugt auch Daten von diesem empfangen.

Dass Funknetzwerk zwischen den Funkschnittstellen 3a, 3b, also das WLAN, ist hier vorteilhafterweise ungerichtet, so dass alle Fahrzeuge F über eine einzige WLAN-Funkschnittstelle 3a mit dem Accesspunkt AP in Kontakt treten können. Im Gegensatz zu herkömmlichen Ladestationen können also sämtliche Richtantennen für die WLAN-Funkschnittstellen an den Ladestationen entfallen. Die WLAN-Funkschnittstellen an den Fahrzeugen müssen dementsprechend auch nicht mehr gerichtet sein, da die Zuordnung ja über das Assoziationssystem mit den Identifikations-Detektionseinheiten ID-D und den Identifikations-Objekten ID-O erfolgt ist.

Die bevorzugte Ausführungsform gemäß der FIG 4 ähnelt der Ausführungsform gemäß FIG 3 in vielen Dingen. Der Unterschied zwischen diesen beiden Ausführungsformen ist, dass in FIG 4 kein zentrales Steuersystem S abgebildet ist, sondern ein dezentrales Steuersystem mit einer Vielzahl von Teil-Steuersystemen (bzw. "Steuereinheiten") 10, 11 in den Ladestationen L und den Fahrzeugen F, welche Teile des Steuersystems S sind. Im Fahrzeug F befindet sich jeweils eine Steuereinheit 10 und die Ladestationen umfassen ebenfalls eine Steuereinheit 11, wobei die Steuereinheit 10 eines Fahrzeugs F mit der Steuereinheit 11 der Ladestation L (auch EVSE genannt) Kontakt aufnehmen kann und Steuerbefehle innerhalb dieses Kontaktes übermittelt werden können. Es kann dabei voreingestellt oder innerhalb der Kommunikation festgelegt werden, welche dieser Einheiten die Funktion eines Masters und welche die eines Slaves hat. Der Accesspunkt AP kann ebenfalls ein Teil-Steuersystem (nicht dargestellt) aufweisen, mit rudimentären Steuerfunktionen um die koordinierte Kommunikation zwischen den anderen Teil-Steuersystemen zu gewährleisten.

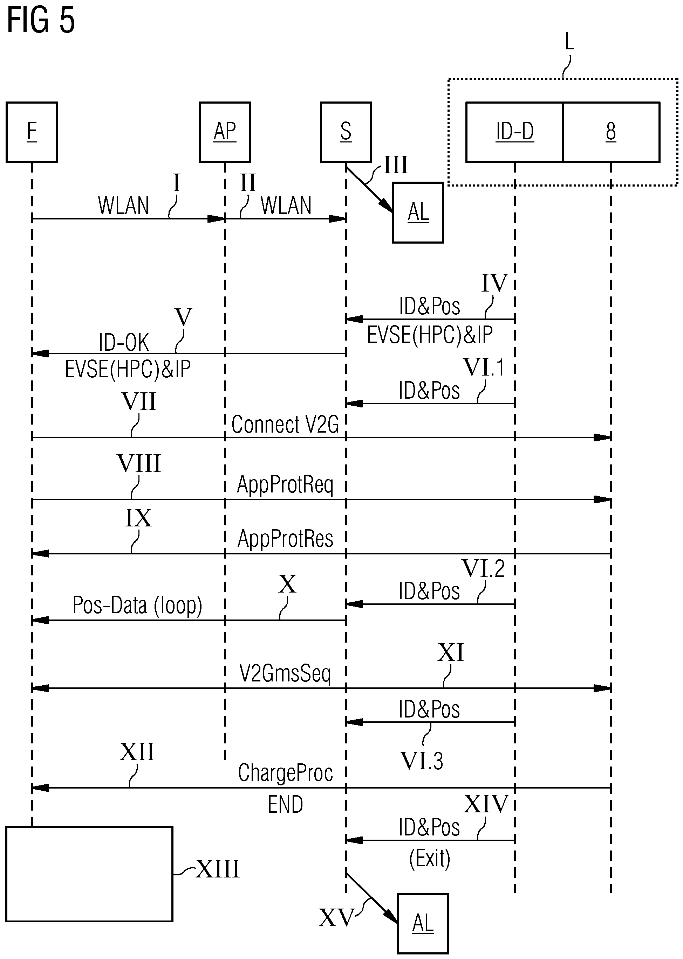

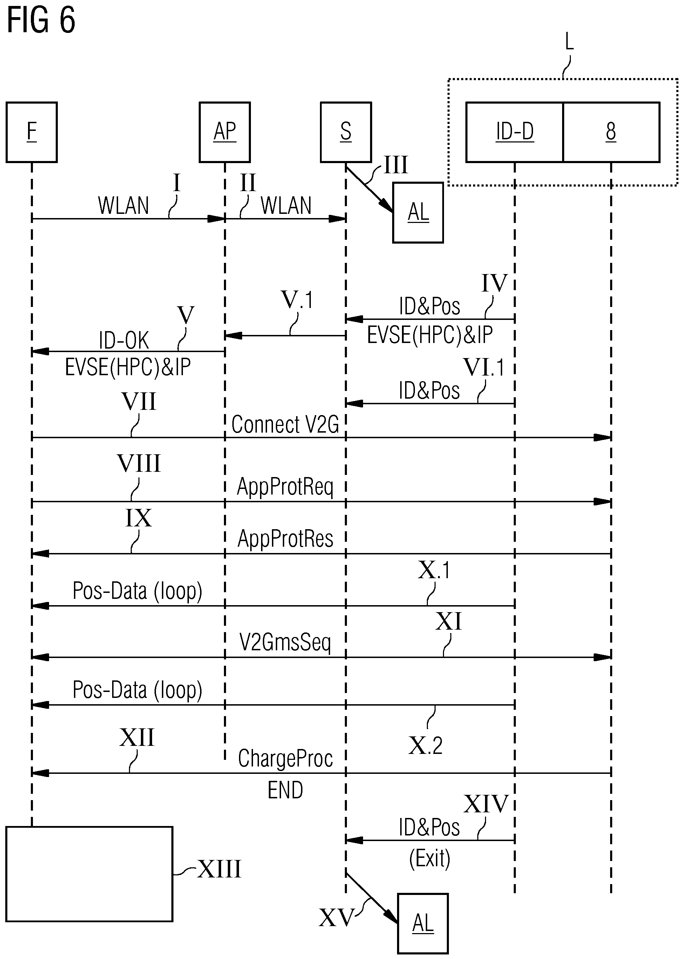

Ein möglicher Ablauf bei der Zuordnung bzw. Assoziierung eines Fahrzeugs F zu einer Ladestation L, des Aufbaus der Kommunikation und die weitere Kommunikation während eines Ladevorgangs werden im Folgenden noch einmal anhand der Figuren 5 und 6 erläutert.

In den Figuren 5 und 6 werden aus Gründen der Übersichtlichkeit und für ein besseres Verständnis der Erfindung nicht alle Schritte gemäß der Norm zur Herstellung einer V2G-Verbindung (Vehicle-to-Grid-Verbindung, d.h. die Verbindung zwischen Fahrzeug und dem Stromnetz bzw. der mit dem Stromnetz verbundene Ladeeinheit) dargestellt, sondern lediglich diejenigen, die zur Erläuterung der Erfindung relevant sind. Außerdem wird im Folgenden - ohne Beschränkung der Allgemeinheit jedoch bevorzugt - davon ausgegangen, dass als Funknetzwerk ein WLAN genutzt wird.

Fährt ein Fahrzeug F in den WLAN-Empfangsbereich des Fahrzeugladesystems 1 ein, wird zunächst eine WLAN-Verbindung ("WLAN") zwischen dem Fahrzeug F und dem Accesspunkt AP hergestellt (Schritt I). Diese WLAN-Verbindung kann z.B. eine low-level-Verbindung sein.

Direkt anschließend kann im Schritt II eine WLAN-Verbindung ("WLAN") zwischen dem Accesspunkt AP und dem Steuersystem S hergestellt werden. Diese WLAN-Verbindung kann z.B. eine high-level-Verbindung sein. Das Fahrzeug F sendet im Schritt II bevorzugt zusätzlich seine Kennung, die E-Bus-ID und seine EVCC-IP-Adresse an das Steuerungssystem bzw. an den Assoziationsmanager.

Das Steuersystem S schreibt diese Informationen des Fahrzeugs F in eine Assoziationsliste AL (Schritt III).

Im Folgenden wird davon ausgegangen, dass in FIG 5 die Fahrzeugposition ("Pos") nur grobe Positionierungsdaten enthält, die eine Zuordnung zu genau einer Ladestation L ermöglichen. In FIG 6 sind die Positionsdaten genauer, so dass zusätzlich eine Rangier- oder Einfahrtshilfe für die Fahrzeuge erreicht werden kann.

Zunächst wird der Ablauf gemäß der FIG 5 beschrieben.

Fährt das Fahrzeug dann konkret eine Ladestation L des Ladesystems 1 an, erkennt die betreffende Identifikations-Detektionseinheit ID-D die Fahrzeug-ID bzw. Kennung aufgrund des Identifikations-Objekts ID-O am Fahrzeug F und sendet diese Informationen zusammen mit Daten über die momentane relative Fahrzeugposition und die EVSE Netzwerkadresse (IP) der Ladestation L ("ID&Pos / EVSE(HPC)&IP") ebenfalls an das Steuersystem S (Schritt IV). Das EVSE ("Electric Vehicle Supply Equipment") umfasst die Ladedaten und ggf. die Ladehistorie des Fahrzeugs. Damit beginnt der Assoziationsprozess. Es wird dann das Fahrzeug F in der Assoziationsliste AL der konkret angefahrenen Ladestation L zugeordnet, Die Übertragung geschieht bevorzugt über den Accesspunkt AP, wie im Schritt V dargestellt ist. so dass sichergestellt werden kann, dass immer eine korrekte Kommunikation zwischen dem Fahrzeug F und der richtigen Ladestation L erfolgt.

Während des gesamten weiteren Vorgangs kann z.B. die Identifikations-Detektionseinheit ID-D in einer Schleife ständig die Fahrzeug-ID (bzw. Kennung) und die Position an das Steuersystem S senden ("ID&Pos"). Dies ist in FIG 5 durch die Schritte VI.1 bis VI.3 symbolisiert. Zur Überprüfung können auch ständig Positionsdaten an das Fahrzeug F gesendet werden ("Pos-Data (loop)"), was hier durch Schritt X nur einmal symbolisiert ist.

Das Steuersystem S überprüft anhand der Fahrzeug-ID, ob dieses zum Aufladen berechtigt ist und sendet bei einer positiven Entscheidung ein OK zusammen mit der EVSE und der IP der Ladestation L an das Fahrzeug F ("ID-OK / EVSE(HPC)&IP"). Die Übertragung geschieht bevorzugt über den Accesspunkt AP, wie im Schritt V dargestellt ist.

Daraufhin wird zwischen dem Fahrzeug F und der zugeordneten Ladestation L über den Accesspunkt AP und das Steuersystem S eine V2G-Verbindung aufgebaut ("Connect V2G"; Schritt VII) und es wird zunächst vom Fahrzeug F die Verbindungsanfrage und eine Anforderung des Protokolls gesendet ("AppProtReq"; Schritt VIII), worauf es von der Ladestation L eine Antwort erhält ("AppProtRes"; Schritt IX).

Das Fahrzeug F sendet daraufhin im Schritt XI über den Accesspunkt AP und das Steuersystem S die zum Laden notwendigen Informationen an die Ladestation L ("V2GmsgSeq"). Daraufhin beginnt der Ladevorgang.

Am Ende des Ladevorgangs ("ChargeProc END") wird dies dem Fahrzeug F von der Ladestation L mitgeteilt (Schritt Nummer XII) .

Nach dem Ladevorgang wird das Fahrzeug F in der Regel die Ladeposition verlassen ("End of charge / F leaving", Schritt XIII) .

Die Identifikations-Detektionseinheit ID-D kann dies z. B. feststellen, indem sie das Identifikations-Objekt ID-O nicht mehr lesen kann und informiert im Schritt XIV das Steuersystem S darüber ("ID&Pos/(Exit)") . Daraufhin kann im Schritt XV der Eintrag in der Assoziationsliste AL gelöscht werden.

Im Folgenden wird der weitere Ablauf gemäß der FIG 6 beschrieben.

Auch hier erkennt die betreffende Identifikations-Detektionseinheit ID-D die Fahrzeug-ID bzw. Kennung aufgrund des Identifikations-Objekts ID-O am Fahrzeug F, wenn dieses konkret eine Ladestation L des Ladesystems 1 ansteuert. Diese Informationen werden zusammen mit Daten über die momentane relative Fahrzeugposition und die EVSE Netzwerkadresse (IP) der Ladestation L ("ID&Pos / EVSE(HPC)&IP") ebenfalls an das Steuersystem S gesendet (Schritt IV), wobei die Positionsdaten nun so genau sind, dass eine gute Positionierung des Fahrzeuges F zu der betreffenden Ladestation erreicht werden kann.

Das Steuerungssystem kann dann aufgrund der übereinstimmenden Fahrzeug-ID das Fahrzeug F und die Ladestation L assoziieren indem die von der Ladestation im Schritt IV übertragenen Informationen in der Assoziationsliste AL dem Fahrzeug F zugeordnet eingetragen werden. Daran anschließend werden die von der Ladestation übertragenen Informationen wie die IP-Adresse der EVSE, sowie die genauen Positionsdaten in den Schritten V.1 und V an den E-Bus kommuniziert. Die Übertragung geschieht bevorzugt über den Accesspunkt AP, wie im Schritt V.1 dargestellt ist. Es ist aber auch eine direkte Kommunikation wie in FIG 5 gezeigt möglich.

Das Fahrzeug kann dann eine direkte p2p-Verbindung VII mit der EVSE der Ladestation etablieren und anschließend das V2G-Ladeprotokoll durch die Schritte VIII und IX initiieren ("AppProtReq", "AppProtRes"). Auf diese Weise kann sichergestellt werden, dass immer eine korrekt zugeordnete Kommunikation zwischen dem Fahrzeug F und der zugehörigen Ladestation L erfolgt.

Während des gesamten weiteren Vorgangs kann die Identifikations-Detektionseinheit ID-D zyklisch die Fahrzeug-ID (bzw. Kennung) und die aktuelle Position("ID&Pos") direkt zum assoziierten Fahrzeug senden. Dies ist in FIG 6 durch die Schritte X.1 und X.2 symbolisiert. Dadurch werden ständig Positionsdaten an das Fahrzeug F gesendet ("Pos-Data (loop)").

Im Schritt XI wird dann das Ladeprotokoll abgefahren, wobei die einzelnen V2G-Messages entsprechend ausgetauscht werden. Auch diese Kommunikation geschieht bevorzugt über den Accesspunkt AP.

Nach dem Ladevorgang wird das Fahrzeug F auch hier in der Regel die Ladeposition verlassen (Schritt XIII).

Die Identifikations-Detektionseinheit ID-D kann dies z. B. feststellen, indem sie das Identifikations-Objekt ID-O nicht mehr lesen kann und informiert im Schritt XIV das Steuersystem S darüber (Pos data loop Exit). Daraufhin kann im Schritt XV der Eintrag in der Assoziationsliste AL gelöscht werden.

Es wird abschließend noch einmal darauf hingewiesen, dass es sich bei den vorhergehenden detaillierten Beschreibungen zu den Figuren lediglich um Ausführungsbeispiele handelt, welche vom Fachmann in verschiedenster Weise modifiziert werden können, ohne den Bereich der Erfindung zu verlassen. Der Schutzbereich der Erfindung ist durch die Ansprüche definiert. Beispielsweise können Identifikations-Detektionseinheit ID-D und Identifikations-Objekt ID-O in anderer Weise als oben beschrieben aufgebaut sein, zum Beispiel als Infrarot-Empfänger und Infrarot-Sender oder Empfänger bzw. Sender für RFID oder niederfrequente oder hochfrequente Radiowellen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass die betreffenden Komponenten aus mehreren zusammenwirkenden Teil-Komponenten bestehen, die gegebenenfalls auch räumlich verteilt sein können.

## Patentansprüche

1. Fahrzeugladesystem (1) umfassend
- eine Mehrzahl von Ladestationen (L) zum elektrischen Aufladen von Fahrzeugen (F),
- ein Steuersystem (S, 10, 11),
- ein Kommunikationsnetzwerk (2) zur Kommunikation zwischen dem Steuersystem (S, 10, 11) und weiteren Komponenten des Fahrzeugladesystems (1),
- Funkelemente (3) zur Herstellung einer drahtlosen Kommunikation zwischen den Fahrzeugen (F) und dem Steuersystem (S, 10, 11), wobei das Fahrzeugladesystem (1) einen Accesspunkt (AP) mit einer WLAN-Schnittstelle (3a) aufweist, über die parallel mehrere Fahrzeuge (F) mit dem Fahrzeugladesystem (1) kommunizieren können, und
- an zumindest einem Teil der Ladestationen (L) angeordnete Identifikations-Detektionseinheiten (ID-D) zur Erkennung von aufzuladenden Fahrzeugen (F) mittels den Fahrzeugen (F) zugeordneten Identifikations-Objekten(ID-O), wobei die Identifikations-Detektionseinheit (ID-D) eine ausschließlich auf die Ladestation (L) und deren Einfahrt- bzw. Haltebereich eingeschränkte Reichweite oder Ausrichtung aufweist,
- ein Assoziationssystem (ID-D, ID-O), welches neben den Identifikations-Detektionseinheiten (ID-D) Identifikations-Objekte (ID-O) umfasst, wobei jedes Identifikations-Objekt (ID-O) eine individuelle Kennung bereitstellt, die durch die Identifikations-Detektionseinheiten (ID-D) detektiert werden kann, und zur Anbringung an einem Fahrzeug (F) ausgebildet ist, und wobei das Assoziationssystem (ID-D, ID-O) die Fahrzeuge (F) jeweils im Fahrzeugladesystem (1) eindeutig der angefahrenen Ladestation (L) zuordnet, an der aktuell geladen werden soll,
- wobei zumindest eine der Ladestationen (L) einen Lademast (6) aufweist, wobei der Lademast (6) mit einem Schwenkarm und/oder einem Gelenkarm (6a) ausgestattet ist und die Identifikations-Detektionseinheit (ID-D) am Schwenkarm und/oder Gelenkarm (6a) montiert ist und/oder wobei der Lademast (6) mit einem invertierten Pantographen (6a) ausgestattet ist und sich die Identifikations-Detektionseinheit (ID-D) über dem invertierten Pantographen (6a) befindet.

2. Fahrzeugladesystem nach Anspruch 1, wobei die Identifikations-Detektionseinheit (ID-D) eine auf die jeweilige Ladestation (L) und deren Einfahrt- bzw. Haltebereich eingeschränkte Bestimmung der relativen Position des im derart eingeschränkten Sichtbereich befindlichen Identifikations-Objekts aufweist.

3. Fahrzeugladesystem nach einem der vorangehenden Ansprüche, wobei das Steuersystem (S, 10, 11) mehrere Ladestationen (L), vorzugsweise alle Ladestationen (L), einer Ladestationsgruppe (LG) steuert, wobei das Steuersystem (S, 10, 11) bevorzugt eine Kommunikation zwischen einem Fahrzeug (F) und einer Ladestation (L) assoziiert, wobei nach erfolgter Assoziation bevorzugt eine p2p-Verbindung zwischen der durch die Assoziation bestimmten Ladestation (L) und dem Fahrzeug (F) erfolgt.

4. Fahrzeugladesystem nach einem der vorangehenden Ansprüche, wobei das Steuersystem (10, 11) ein dezentralisiertes Steuersystem ist, welches eine Mehrzahl von Teil-Steuersystemen (10, 11) umfasst, die auf verschiedene Ladestationen (L) und/oder Fahrzeuge (F) verteilt angeordnet sind und zusammenwirken.

5. Fahrzeugladesystem (1) nach einem der vorangehenden Ansprüche, wobei die Ladestation (L) vorzugsweise eine Ladeeinheit (7), bevorzugt einen High Power Charger (7), einen Ladeeinheitscontroller (8), bevorzugt einen High Power Charger Controller (8), und eine Ladekommunikationssteuerung (9), bevorzugt einen Supply Equipment Communication Controller (9) aufweist und/oder die Ladestationen (L) zum Laden gemäß V2G-Protokollversionen nach der ISO/IEC 15118-2 ausgelegt sind.

6. Fahrzeugladesystem (1) nach einem der vorangehenden Ansprüche, wobei im Fall, dass der Lademast (6) mit einem invertierten Pantographen (6a) ausgestattet ist, die Identifikations-Detektionseinheit (ID-D) an einem feststehenden Teil des Lademastes (6) über dem invertierten Pantographen (6a) angeordnet ist.

7. Fahrzeugladesystem (1) nach einem der vorangehenden Ansprüche, wobei eine Identifikations-Detektionseinheit (ID-D) zumindest eine der folgenden Komponenten umfasst:
- eine Kamera, vorzugsweise zur Aufnahme von Identifikations-Objekten (ID-O), welche Zeichenkombinationen, Barcodes und/oder Farbcodierungen umfassen, und bevorzugt zur ein- oder mehrdimensionalen Positionsbestimmung der Identifikations-Objekte ausgelegt ist,
- einen IR-Empfänger zum Empfang von Signalen von IR-Sendern der Identifikations-Objekte (ID-O)

8. Fahrzeugladeverfahren zum elektrischen Aufladen eines Fahrzeugs (F) unter Verwendung eines Fahrzeugladesystems (1) nach einem der vorangehenden Ansprüche, wobei für einen Aufladevorgang, zumindest initial, eine drahtlose Kommunikation zwischen dem Steuersystem (S, 10, 11) und dem aufzuladenden Fahrzeug (F) über den Accesspunkt (AP) mit WLAN-Schnittstelle (3a) erfolgt und hierzu mittels einer am Lademast (6) der Ladestation (L) angeordneten Identifikations-Detektionseinheit (ID-D) ein aufzuladendes Fahrzeug (F) mittels eines dem Fahrzeug (F) zugeordneten und die eindeutige Kennung bereitstellenden Identifikations-Objekts (ID-O) erkannt wird und dem Steuersystem (S, 10, 11) und/oder dem aufzuladenden Fahrzeug (F) eine eindeutige Zuordnung dieses Fahrzeugs (F) zur angefahrenen Ladestation (L) übermittelt wird.

9. Fahrzeugladeverfahren nach Anspruch 8 umfassend einen oder mehrere der Schritte:
a. Einfahren eines Fahrzeugs (F) in einen Empfangsbereich von Funkelementen (3a) zur drahtlosen Kommunikation zwischen dem Steuersystem (S, 10, 11) und dem aufzuladenden Fahrzeug (F),
b. Herstellung eines drahtlosen Kommunikationskanals zwischen dem eingefahrenen Fahrzeug (F) und dem Steuersystem (S, 10, 11), wobei parallel mehrere Fahrzeuge (F) mit dem Fahrzeugladesystem (1) kommunizieren können,
c. Wenn noch nicht erfolgt: Anfahrt des Fahrzeugs (F) an die Ladestation (L) und Erfassen einer individuellen Kennung, welche dem Identifikations-Objekt (ID-O) des Fahrzeugs zugeordnet ist, durch die Identifikations-Detektionseinheit (ID-D) und eindeutige Zuordnung des Fahrzeugs (F) zur angefahrenen Ladestation (L), an der aktuell geladen werden soll,
d. Übermittlung der relevanten Informationen zwischen dem Fahrzeug (F) und dem Fahrzeugladesystem (1) für eine V2G-Verbindung zwischen dem Fahrzeug (F) und der Ladestation (L), bevorzugt initiiert vom Steuersystem (S, 10, 11), und Herstellung einer V2G-Verbindung zwischen dem Fahrzeug (F) und der Ladestation (L),
e. Übermittlung eines Freigabesignals (AK) zum Start des Ladevorgangs durch das Fahrzeug (F),
f. Abwicklung des Ladevorgangs für das betreffende Fahrzeug (F) über die derart etablierte Verbindung.

10. Fahrzeugladeverfahren nach einem der Ansprüche 8 bis 9, wobei zum Start des Ladevorgangs ein Freigabesignal (AK) vom Fahrzeug (F) an das Steuersystem (S) und/oder die Ladestation (L) übermittelt wird, wobei dieses Freigabesignal (AK) vorzugsweise bei Anziehen einer Handbremse des Fahrzeugs (F) übermittelt wird.

11. Fahrzeugladeverfahren nach einem der Ansprüche 8 bis 10, wobei Signale von einer Identifikations-Detektionseinheit (ID-D) an ein Identifikations-Objekt (ID-O) gesendet werden.

12. Fahrzeugladestation (L) umfassend einen Lademast (6), und eine Identifikations-Detektionseinheit (ID-D), welche am Lademast (6) montiert ist,
wobei der Lademast (6) mit einem Schwenkarm und/oder einem Gelenkarm (6a) ausgestattet ist und die Identifikations-Detektionseinheit (ID-D) am Schwenkarm und/oder Gelenkarm (6a) montiert ist und/oder wobei der Lademast (6) mit einem invertierten Pantographen (6a) ausgestattet ist und sich die Identifikations-Detektionseinheit (ID-D) über dem invertierten Pantographen (6a) befindet,
wobei die Fahrzeugladestation (L) zum Betrieb in dem Fahrzeugladesystem (1) nach einem der Ansprüche 1 bis 7 und/oder zum Betrieb mit dem Fahrzeugladeverfahren nach einem der Ansprüche 8 bis 11 ausgelegt ist.

## Claims

1. Vehicle charging system (1) comprising
- a plurality of charging stations (L) for electrically charging vehicles (F),
- a control system (S, 10, 11),
- a communication network (2) for communication between the control system (S, 10, 11) and further components of the vehicle charging system (1),
- radio elements (3) for establishing wireless communication between the vehicles (F) and the control system (S, 10, 11), wherein the vehicle charging system (1) has an access point (AP) with a WLAN interface (3a) via which multiple vehicles (F) are able to communicate in parallel with the vehicle charging system (1), and
- identification and detection units (ID-D), arranged on at least some of the charging stations (L), for identifying vehicles (F) to be charged by way of identification objects (ID-O) assigned to the vehicles (F), wherein the identification and detection unit (ID-D) has a range or orientation restricted exclusively to the charging station (L) and its entry region or stopping region,
- an association system (ID-D, ID-O) that comprises identification objects (ID-O) in addition to the identification and detection units (ID-D), wherein each identification object (ID-O) provides an individual identifier that is able to be detected by the identification and detection units (ID-D) and is designed to be applied to a vehicle (F), and wherein the association system (ID-D, ID-O) unambiguously assigns each of the vehicles (F) in the vehicle charging system (1) to the charging station (L) that is being driven to and at which charging is currently intended to be performed,
- wherein at least one of the charging stations (L) has a charging mast (6), wherein the charging mast (6) is equipped with a pivoting arm and/or an articulated arm (6a) and the identification and detection unit (ID-D) is mounted on the pivoting arm and/or articulated arm (6a) and/or wherein the charging mast (6) is equipped with an inverted pantograph (6a) and the identification and detection unit (ID-D) is located above the inverted pantograph (6a).

2. Vehicle charging system according to Claim 1, wherein the identification and detection unit (ID-D) comprises a determination, restricted to the respective charging station (L) and its entry region or stopping region, of the relative position of the identification object located in the field of view restricted in this way.

3. Vehicle charging system according to either of the preceding claims, wherein the control system (S, 10, 11) controls multiple charging stations (L), preferably all charging stations (L), of a charging station group (LG), wherein the control system (S, 10, 11) preferably associates communication between a vehicle (F) and a charging station (L), wherein, after the association has been made, there is preferably a p2p connection between the charging station (L) and the vehicle (F) determined by the association.

4. Vehicle charging system according to one of the preceding claims, wherein the control system (10, 11) is a decentralized control system that comprises a plurality of sub-control systems (10, 11) that are arranged in a manner distributed among various charging stations (L) and/or vehicles (F) and interact.

5. Vehicle charging system (1) according to one of the preceding claims, wherein the charging station (L) preferably has a charging unit (7), preferably a high power charger (7), a charging unit controller (8), preferably a high power charger controller (8), and a charging communication controller (9), preferably a supply equipment communication controller (9) and/or the charging stations (L) are designed for charging in accordance with V2G protocol versions as per ISO/IEC 15118-2.

6. Vehicle charging system (1) according to one of the preceding claims, wherein, if the charging mast (6) is equipped with an inverted pantograph (6a), the identification and detection unit (ID-D) is arranged on a fixed part of the charging mast (6) above the inverted pantograph (6a).

7. Vehicle charging system (1) according to one of the preceding claims, wherein an identification and detection unit (ID-D) comprises at least one of the following components:
- a camera, preferably for capturing identification objects (ID-O) that comprise character combinations, barcodes and/or colour codes, and is preferably designed to determine the position of the identification objects in one or more dimensions,
- an IR receiver for receiving signals from IR transmitters of the identification objects (ID-O).

8. Vehicle charging method for electrically charging a vehicle (F) using a vehicle charging system (1) according to one of the preceding claims, wherein, for a charging procedure, wireless communication takes place at least initially between the control system (S, 10, 11) and the vehicle (F) to be charged via the access point (AP) with a WLAN interface (3a) and, for this purpose, a vehicle (F) to be charged is identified by way of an identification object (ID-0) that is assigned to the vehicle (F) and provides the unique identifier by an identification and detection unit (ID-D) arranged on the charging mast (6) of the charging station (L), and an unambiguous assignment of this vehicle (F) to the charging station (L) being driven to is transmitted to the control system (S, 10, 11) and/or to the vehicle (F) to be charged.

9. Vehicle charging method according to Claim 8, comprising one or more of the following steps:
a. driving a vehicle (F) into a reception range of radio elements (3a) for wireless communication between the control system (S, 10, 11) and the vehicle (F) to be charged,
b. establishing a wireless communication channel between the driven-in vehicle (F) and the control system (S, 10, 11), wherein multiple vehicles (F) are able to communicate in parallel with the vehicle charging system (1),
c. if this has not yet taken place: driving the vehicle (F) up to the charging station (L) and capturing an individual identifier that is assigned to the identification object (ID-O) of the vehicle, by way of the identification and detection unit (ID-D), and unambiguously assigning the vehicle (F) to the driven-to charging station (L) at which charging is currently intended to be performed,
d. transmitting the relevant information between the vehicle (F) and the vehicle charging system (1) for a V2G connection between the vehicle (F) and the charging station (L), preferably initiated by the control system (S, 10, 11), and establishing a V2G connection between the vehicle (F) and the charging station (L),
e. transmitting an enable signal (AK) in order to start the charging process performed by the vehicle (F),
f. carrying out the charging process for the vehicle (F) in question via the connection established in this way.

10. Vehicle charging method according to either of Claims 8 and 9, wherein, in order to start the charging process, an enable signal (AK) is transmitted from the vehicle (F) to the control system (S) and/or the charging station (L), wherein this enable signal (AK) is preferably transmitted when a handbrake of the vehicle (F) is applied.

11. Vehicle charging method according to one of Claims 8 to 10, wherein signals are transmitted from an identification and detection unit (ID-D) to an identification object (ID-O).

12. Vehicle charging station (L) comprising a charging mast (6) and an identification and detection unit (ID-D) that is mounted on the charging mast (6),
wherein the charging mast (6) is equipped with a pivoting arm and/or an articulated arm (6a) and the identification and detection unit (ID-D) is mounted on the pivoting arm and/or articulated arm (6a) and/or wherein the charging mast (6) is equipped with an inverted pantograph (6a) and the identification and detection unit (ID-D) is located above the inverted pantograph (6a),
wherein the vehicle charging station (L) is designed for operation in the vehicle charging system (1) according to one of Claims 1 to 7 and/or for operation with the vehicle charging method according to one of Claims 8 to 11.

## Revendications

1. Système (1) de charge d'un véhicule comprenant
- une pluralité de postes (L) de charge pour charger électriquement des véhicules (F),
- un système (S, 10, 11) de commande,
- un réseau (2) de communication pour la communication entre le système (S, 10, 11) de commande et d'autres composants du système (1) de charge de véhicule,
- des éléments (3) radios pour ménager une communication sans fil entre les véhicules (F) et le système (S, 10, 11) de commande, dans lequel le système (1) de charge d'un véhicule a un point (AP) d'accès, ayant une interface (3a) WLAN, par laquelle les plusieurs véhicules (F) peuvent en parallèle communiquer avec le système (1) de charge d'un véhicule, et
- des unités (ID-D) de détection d'identification disposées sur au moins une partie des postes (L) de charge pour reconnaître des véhicules (F) à charger au moyen d'objets (ID-O) d'identification affectés aux véhicules (F), dans lequel l'unité (ID-D) de détection d'identification a une portée ou une orientation limitée exclusivement au poste (L) de charge et à sa zone d'entrée ou d'arrêt,
- un système (ID-D, ID-O) d'association, qui comprend, outre les unités (ID-D) de détection d'identification, des objets (ID-O) d'identification, dans lequel chaque objet (ID-O) d'identification met à disposition une identification individuelle, qui peut être détectée par les unités (ID-D) de détection d'identification et qui est constituée pour être mise sur un véhicule (F), et dans lequel le système (ID-D, ID-O) d'association associe les véhicules (F) respectivement dans le système (1) de charge d'un véhicule, de manière univoque, au poste (L) de charge, où il est arrivé et où il doit être actuellement chargé,
- dans lequel au moins l'un des postes (L) de charge a un mât (6) de charge, dans lequel le mât (6) de charge est équipé d'un bras pivotant et/ou d'un bras (6a) articulé et l'unité (ID-D) de détection d'identification est montée sur le bras pivotant et/ou le bras (6a) articulé, et/ou dans lequel le mât (6) de charge est équipé d'un pantographe (6a) inversé et l'unité (ID-D) de détection d'identification se trouve sur le pantographe (6a) inversé.

2. Système de charge d'un véhicule suivant la revendication 1, dans lequel l'unité (ID-D) de détection d'identification a une détermination, limitée au poste (L) de charge respectif et à sa zone d'entrée ou d'arrêt, de la position relative de l'objet d'identification se trouvant dans la zone de visibilité ainsi limitée.

3. Système de charge d'un véhicule suivant l'une des revendications précédentes,
dans lequel le système (S, 10, 11) de commande commande plusieurs postes (L) de charge, de préférence tous les postes (L) de charge, d'un groupe (LG) de postes de charge, dans lequel le système (S, 10, 11) de commande associe, de préférence, une communication entre un véhicule (F) et un poste (L) de charge, dans lequel, l'association effectuée, il est produit, de préférence, une liaison p2p entre le véhicule (F) et le poste (L) de charge déterminé par l'association.

4. Système de charge d'un véhicule suivant l'une des revendications précédentes,
dans lequel le système (10, 11) de commande est un système de commande décentralisé, qui comprend une pluralité de systèmes (10, 11) de commande partiels, qui sont répartis sur divers postes (L) de charge et/ou véhicules (F) et qui coopèrent.

5. Système (1) de charge d'un véhicule suivant l'une des revendications précédentes,
dans lequel le poste (L) de charge a, de préférence, une unité (7) de charge, de préférence un High Power Charger (7), un Controller (8) d'unité de charge, de préférence un High Power Charger Controller (8) et une commande (9) de communication de charge, de préférence un Supply Equipment Communication Controller (9) et/ou les postes (L) de charge sont conçus pour la charge suivant des versions du protocole V2G suivant l'ISO/IEC 15118-2.

6. Système (1) de charge d'un véhicule suivant l'une des revendications précédentes,
dans lequel, dans le cas où le mât (6) de charge est équipé d'un pantographe (6a) inversé, l'unité (ID-D) de détection d'identification est montée sur une partie fixe du mât (6) de charge, par l'intermédiaire du pantographe (6a) inversé.

7. Système (1) de charge d'un véhicule suivant l'une des revendications précédentes, dans lequel une unité (ID-D) de détection d'identification comprend au moins l'un des composants suivants :
- une caméra, de préférence d'enregistrement d'objets (ID-O) d'identification , qui comprennent des combinaisons de caractères, des codes-barres et/ou des codages en couleurs, et est conçue de préférence pour une détermination unidimensionnelle ou pluridimensionnelle de position des objets d'identification,
- un récepteur IR de réception de signaux d'émetteurs IR des objets (ID-O) d'identification.

8. Procédé de charge d'un véhicule pour la charge électrique d'un véhicule (F) en utilisant un système (1) de charge d'un véhicule suivant l'une des revendications précédentes, dans lequel, pour une opération de charge, il est produit, au moins initialement une communication sans fil entre le système (S, 10, 11) de commande et le véhicule (F) à charger, par l'intermédiaire du point (AP) d'accès ayant une interface (3a) WLAN, et on détecte à cet effet, au moyen d'une unité (ID-D) de détection d'identification montée sur le mât (6) de charge du poste (L) de charge, un véhicule (F) à charger au moyen d'un objet (ID-O) d'identification affecté au véhicule (F) et mis à disposition par l'identification univoque et on transmet, au système (S, 10, 11) de commande et/ou au véhicule (F) à charger, une association univoque de ce véhicule (F) au poste (L) de charge où il est entré.

9. Procédé de charge d'un véhicule suivant la revendication 8, comprenant un ou plusieurs des stades :
a. entrée d'un véhicule (F) dans une zone de réception d'éléments (3a) radio pour la communication sans fil entre le système (S, 10, 11) de commande et le véhicule (F) à charger,
b. établissement d'un canal de communication sans fil entre le véhicule (F) entré et le système (S, 10, 11) de commande, plusieurs véhicules (F) pouvant communiquer en parallèle avec le système (1) de charge d'un véhicule,
c. si cela n'a pas encore eu lieu : arrivée du véhicule (F) au poste (L) de charge et détection d'une identification individuelle, qui est affectée à l'objet (ID-O) d'identification du véhicule par l'unité (ID-D) de détection d'identification et par l'association univoque du véhicule (F) au poste (L) de charge, dans lequel il est entré et/ou il doit être chargé actuellement,
d. transmission des informations pertinentes entre le véhicule (F) et le système (1) de charge d'un véhicule pour une liaison V2G entre le véhicule (F) et le poste (L) de charge, initiée de préférence par le système (S, 10, 11) de commande et établissement d'une liaison V2G entre le véhicule (F) et le poste (L) de charge,
e. transmission d'un signal (AK) de validation pour lancer l'opération de charge par le véhicule (F),
f. déroulement de l'opération de charge pour le véhicule (F) concerné par la liaison ainsi établie.

10. Procédé de charge d'un véhicule suivant l'une des revendications 8 à 9,
dans lequel, pour lancer l'opération de charge, on transmet un signal (AK) de validation du véhicule (F) au système (S) de commande et/ou au poste (L) de charge, dans lequel on transmet ce signal (AK) de validation, de préférence en tirant un frein à main du véhicule (F).

11. Procédé de charge d'un véhicule suivant l'une des revendications 8 à 10,
dans lequel on envoie des signaux d'une unité (ID-D) de détection d'identification à un objet (ID-O) d'identification.

12. Poste (L) de charge d'un véhicule comprenant un mât (6) de charge et une unité (ID-D) de détection d'identification, qui est montée sur le mât (6) de charge,
dans lequel le mât (6) de charge est équipé d'un bras pivotant et/ou d'un bras (6a) articulé et l'unité (ID-D) de détection d'identification est montée sur le bras pivotant et/ou le bras (6a) articulé, et/ou dans lequel le mât (6) de charge est équipé d'un pantographe (6a) inversé et l'unité (ID-D) de détection d'identification se trouve sur le pantographe (6a) inversé,
dans lequel le poste (L) de charge d'un véhicule est conçu pour fonctionner dans le système (1) de charge d'un véhicule suivant l'une des revendications 1 à 7 et/ou pour fonctionner par le procédé de charge d'un véhicule suivant l'une des revendications 8 à 11.
